# EUROPÄISCHE PATENTSCHRIFT

(11) **EP 0 890 088 B1**
(45) Veröffentlichungstag und Bekanntmachung des Hinweises auf die Patenterteilung: **28.11.2001**
(21) Anmeldenummer: 97918027.0
(22) Anmeldetag: 17.03.1997
(51) Int. Cl.: G01M 3/22

(54) **EINRICHTUNG UND VERFAHREN ZUR LECKAGEERKENNUNG**
MEANS AND METHOD FOR LEAKAGE DETECTION
DISPOSITIF ET PROCEDE POUR DETECTER DES FUITES

(30) Priorität: 26.03.1996 DE 19611981; 22.10.1996 DE 19643637
(43) Veröffentlichungstag der Anmeldung: 13.01.1999
(73) Patentinhaber: Framatome ANP GmbH, 91058 Erlangen (DE)
(72) Erfinder: JAX, Peter, D-91056 Erlangen (DE); KNOBLACH, Walter, D-91058 Erlangen (DE)
(74) Vertreter: Mörtel & Höfner
(86) Internationale Anmeldenummer: DE9700536
(87) Internationale Veröffentlichungsnummer: WO9736159

(56) Entgegenhaltungen:
- EP-A- 0 525 593
- WO-A-88/08967
- DE-C- 579 184

## Beschreibung

Die Erfindung betrifft eine Einrichtung zur Leckageerkennung und Leckageortung an einer Anlage, insbesondere an einer Rohrleitung, mit einer Sammelleitung, die für einen Stoff permeabel ist, und die mit einer Pumpe und mit einem Sensor für den Stoff verbunden ist.

Die Erfindung betrifft auch ein Verfahren zur Leckageerkennung und Leckageortung an einer Anlage, insbesondere an einer Rohrleitung, wobei ein Konzentrationsmaximum eines Stoffes, der in eine permeable Sammelleitung eingedrungen ist, detektiert und geortet wird.

Aus der DE 24 31 907 C3 ist ein Leckerkennungs- und Ortungssystem (LEOS) bekannt. Dieses System beinhaltet eine Sammelleitung, die für zu detektierende Stoffe durchlässig ist. Mit der Sammelleitung ist eine Pumpe verbunden, mit der nacheinander Volumina eines Transportmediums, das z.B. Luft ist, durch die Sammelleitung hindurch befördert wird. Am Ende der Sammelleitung ist mindestens ein Sensor angeordnet, der in die Sammelleitung eingedrungene Stoffe erkennt. Die Sammelleitung ist in der Nähe einer zu überwachenden Anlage, insbesondere entlang einer Rohrleitung, angeordnet. Bei einem Leck in der Anlage oder in der Rohrleitung gelangt dann der aus dem Leck ausgetretene Stoff zur Sammelleitung und dringt in die Sammelleitung ein. Es bildet sich dadurch in der Nähe des Lecks in der dort verlegten Sammelleitung ein Konzentrationsmaximum des Stoffes aus. Beim nächsten Pumpvorgang des Leckerkennungs- und Ortungssystems gelangt dieses Konzentrationsmaximum zum Sensor. Aus der Zeitspanne, die zwischen dem Einschalten der Pumpe und dem Ansprechen des Sensors vergeht, kann der Leckageort bestimmt werden.

Dieses bekannte System ist nur einsetzbar, wenn in der zu überwachenden Anlage ein Stoff vorhanden ist, der einerseits in die Sammelleitung eindringen kann und andererseits von einem Sensor zu detektieren ist.

Aus der EP 0 525 593 B1 ist eine Vorrichtung bekannt, mit der bei Einsatz des genannten Leckerkennungs- und Ortungssystems (LEOS) aus einem Leck ausgetretene Säure detektiert und das Leck geortet werden kann. Das ist dadurch möglich, daß in der Nähe der Sammelleitung ein Material angebracht ist, das bei Kontakt mit der Säure unter Bildung eines detektierbaren Stoffes, für den die Sammmelleitung permeabel ist, chemisch reagiert. Dieses Material kann Zink, insbesondere ein Zinkdraht, sein. Zink reagiert mit Säure nämlich unter Bildung von Wasserstoff, der mit dem bekannten Leckerkennungs- und Ortungssystem in einfacher Weise detektiert werden kann.

Bisher ist es noch nicht möglich, mit dem bekannten Leckerkennungs- und Ortungssystem aus einem Leck ausgetretene Lösungen, die neutral oder sogar alkalisch sein können, zu detektieren. Eine solche Lösung, die durch eine Pipeline transportiert wird, kann beispielsweise Salzwasser sein. Bei der Herstellung unterirdischer Gasspeicher für Erdgas muß nämlich häufig Salzwasser entfernt werden, das bis zu 300 g Salz pro Liter enthält. Dazu muß häufig eine Salzwasserleitung über sehr große Strecken, beispielsweise bis zum Meer, geführt werden. Da das Salzwasser Pflanzen schädigen kann, ist es erforderlich, diese Salzwasserleitungen zu überwachen, um ein Leck schnell und zuverlässig feststellen und orten zu können.

Der Erfindung lag daher die Aufgabe zugrunde, das als solches bekannte Leckerkennungs- und Ortungssystem (LEOS) und das dazugehörige Verfahren so auszugestalten, daß auch Lösungen, die nicht sauer zu sein brauchen, z.B. Salzwasser, detektiert werden können.

Die Aufgabe, LEOS in geeigneter Weise auszugestalten, wird gemäß der Erfindung dadurch gelöst, daß außerhalb der Sammelleitung an ihr entlang ein Metalldraht angeordnet ist, der mit dem negativen Pol einer Gleichspannungsquelle in Verbindung steht.

Falls aus der zu überwachenden Rohrleitung eine Lösung, beispielsweise eine Salzlösung, austritt, die an einer Stelle den Draht berührt, kommt es dort zu einer Elektrolyse. Dadurch bedingt wird am Metalldraht, der als Kathode wirkt und der mit dem negativen Pol der Gleichspannungsquelle verbunden ist, Wasserstoff erzeugt. Schon geringe Mengen Wasserstoff reichen dann aus, um in die Sammelleitung einzudringen, die für Wasserstoff permeabel ist. Beim nächsten Spülvorgang gelangt dann der Wasserstoff, der sich am Ort des Leckes in der Sammelleitung angesammelt hat, zum Sensor, der den Wasserstoff detektiert. Der Ort des Leckes wird dann in üblicher Weise ermittelt.

Mit der Erfindung wird der Vorteil erzielt, daß an einem Behälter oder an einer Rohrleitung ein Leck geortet werden kann, wenn eine Lösung, insbesondere Salzwasser, aus dem Leck austritt. Die Lösung braucht nicht sauer zu sein.

Es reicht aus, wenn die Gleichspannungsquelle eine Gleichspannung, die kleiner als 48 Volt ist, liefert. Man kommt also mit einer kleinen, kostengünstigen Gleichspannungsquelle aus.

Unterhalb der Sammelleitung und dem ihr zugeordneten Metalldraht kann eine Auffangrinne angeordnet sein. Damit wird erreicht, daß nach einem Leck die austretende Flüssigkeit stets den Metalldraht benetzt.

Beispielsweise können die Sammelleitung und der Metalldraht von einem saugfähigen Material, z.B. Sand, umgeben sein. Durch die Kapillarkräfte im saugfähigen Material wird sichergestellt, daß stets ausreichend viel Leckflüssigkeit zum Metalldraht gelangt und folglich ausreichend Wasserstoff produziert wird.

Beispielsweise kann die Sammelleitung zusammen mit dem Metalldraht in 8Uhr- bis 9Uhr-Position oder in 3Uhr- bis 4Uhr-Position an einer Rohrleitung entlang angeordnet sein. Mit einer solchen Positionierung wird der Vorteil erzielt, daß Regenwasser, ohne daß es eine Leckageanzeige auslöst, im Boden versickern kann. Wenn hingegen durch ein Leck eine relativ große Flüssigkeitsmenge freigesetzt wird, staut sich diese bis zur Sammelleitung hin auf, so daß eine Leckage erkannt und geortet werden kann. Die genannte Positionierung der Sammelleitung ist besonders dann vorteilhaft einsetzbar, wenn die Rohrleitung und die Sammelleitung in einem Sandbett angeordnet sind.

Beispielsweise ist die Sammelleitung mit dem Metalldraht unterhalb einer Rohrleitung angeordnet. Dadurch ist sichergestellt, daß aus einem Leck austretende Flüssigkeit den Metalldraht erreicht.

Beispielsweise kann die Gleichspannungsquelle variabel sein. Dadurch kann die entstehende Wasserstoffmenge auf die Empfindlichkeit des Systems aus Sammelleitung und Sensor eingestellt werden.

Um eine Verfälschung der Messergebnisse durch Regenwasser zu verhindern, in dem Salze gelöst sein können, werden geringe und gleichmäßig über die Länge der Sammelleitung verteilte Wasserstoffkonzentrationen für die Erkennung eines Leckes nicht berücksichtigt. Nur lokale große Maxima der Wasserstoffkonzentration werden als Indiz für ein Leck angesehen.

Bei der Verwendung einer Auffangrinne für die Lösung kann diese Auffangrinne einen Auslaß an ihrer tiefsten Stelle haben, der so ausgelegt ist, daß der Flüssigkeitseintrag durch Regen sofort durch die Rinne hindurch wieder abfließt. Der Metalldraht, der zusammen mit der Sammelleitung in der Auffangrinne angeordnet ist, wird dann nicht von einer Lösung bedeckt. Nur bei einem Leck in der oberhalb der Auffangrinne angeordneten Rohrleitung bzw. Anlage gelangt soviel Lösung in die Auffangrinne, daß mehr zuläuft als ablaufen kann. Dadurch wird der Metalldraht von der Lösung bedeckt und es wird Wasserstoff erzeugt, der dedektiert werden kann. Hiermit wird der Vorteil erzielt, daß selbst bei Regen keine Fehlmessungen auftreten können.

Mit dem positiven Pol der Gleichspannungsquelle ist beispielsweise eine Metallelektrode verbunden, die im Erdboden anzuordnen ist. Damit wird der wesentliche Vorteil erzielt, daß sich selbst bei einer sehr langen Betriebszeit der Einrichtung nur die positive Metallelektrode, nicht aber der entlang der Sammelleitung angeordnete Metalldraht auflösen kann. Wie beim als solchen bekannten Kathodenschutz für Metalleitungen wird das mit den negativen Pol einer Gleichspannungsquelle verbundene Metallteil nicht korrodiert.

Insbesondere wird der Vorteil erzielt, daß die an einer bekannten Stelle im Erdboden angeordnete Metallelektrode, die beispielsweise aus einem Metallstab bestehen kann, wenn sie stark korrodiert ist, leicht ausgetauscht werden kann. Es ist folglich nicht erforderlich, den an der Sammelleitung angeordneten Metalldraht auszutauschen, was wegen der in der Regel sehr großen Länge der Sammelleitung und damit des Metalldrahtes sehr aufwendig wäre. Darüber hinaus sind die Sammelleitung und der Metalldraht häufig unterirdisch angeordnet und damit schwer zugänglich.

Nach einem anderen Beispiel kann mit dem positiven Pol der Gleichspannungsquelle ein weiterer Metalldraht verbunden sein, der vom mit dem negativen Pol verbundenen Metalldraht beabstandet außerhalb der Sammelleitung an ihr entlang angeordnet ist.

Die beiden Drähte berühren sich nicht. Auch am der Gleich-spannungsquelle gegenüberliegenden Ende der Drähte, ist keine Verbindung zwischen den Drähten vorhanden. Beispielsweise verlaufen die beiden Metalldrähte parallel zueinander.

Beispielsweise können die beiden Metalldrähte aus unterschiedlichen Metallen bestehen. Es ist dann keine separate Gleichspannungsquelle erforderlich. Die Drähte bilden dann aufgrund der unterschiedlichen Niveaus der beiden Metalle in der elektrochemischen Spannungsreihe selbst eine Spannungsquelle. Man kommt dann vorteilhafterweise ohne separate Spannungsquelle aus.

Der eine Metalldraht kann z.B. aus Kupfer und der andere aus verzinktem Kupfer bestehen. Es kommt dann nicht zu Oberflächenveränderungen an den Metalldrähten.

Beispielsweise ist in mindestens einen der Metalldrähte ein Amperemeter eingebunden. Falls nämlich die Leckflüssigkeit, die aus einem Leck herausläuft, elektrisch leitend ist, werden die beiden Metalldrähte durch die Leckflüssigkeit leitend verbunden und das Amperemeter zeigt einen Stromfluß an. Bei geeigneter Auslegung der Spannung kann die Stromstärke zwischen 1 mA und 20 mA liegen. Unabhängig von dem Vorhandensein eines Amperemeters wird durch Elektrolyse Wasserstoff produziert, durch den eine Bestimmung des Leckageortes möglich ist.

Mit der Strommessung wird der Vorteil erzielt, daß in kurzer Zeit zuverlässig erkannt werden kann, ob irgendwo ein Leck vorhanden ist. Es kommt nämlich zu einer meßbaren Stromstärke in den Metalldrähten, wenn eine leitende Flüssigkeit diese verbindet. Es ist dann vorteilhafterweise möglich, daß nur dann, wenn das Amperemeter einen Stromstärkeanstieg registriert hat,zum Bestimmen des Leckageortes eine Messung mit LEOS erfolgt, indem die Sammelleitung gespült und am Sensor das Eintreffen einer erhöhten Wasserstoffkonzentration registriert wird. Es ist folglich nicht notwendig, die Sammelleitung in regelmäßigen Abständen zu spülen. Es reicht aus, einen Spülvorgang einzuleiten, wenn durch die elektrische Messung ein Leck angezeigt worden ist.

Ein Leck kann also viel schneller als bisher geortet werden.

Auch wenn kein Leck festgestellt wird, sollte die Sammelleitung etwa alle sieben Tage mit Frischluft gespült werden, um die Bildung von Kondenswasser in der Leitung zu verhindern. Es ist auch möglich, die Sammelleitung, wenn keine Messung erfolgt, an beiden Enden abzudichten, nachdem sie mit trockener Luft gefüllt worden ist.

Beispielsweise kann an die beiden Enden der Metalldrähtepaare nacheinander eine Gleichspannungsquelle angeschlossen sein, der ein Amperemeter zugeordnet ist. Sollten die beiden Drähte an einem Leckageort durch leitende Flüssigkeit miteinander verbunden sein, kann dann aus den gemessenen Stromstärken der Leckageort elektrisch bestimmt werden, wenn der Widerstand der Metalldrähte pro Längeneinheit bekannt ist. Man kann also den Leckageort zweimal, elektrisch und mit dem Leckerkennungs- und -Ortungssystem (LEOS), bestimmen, und damit die Meßgenauigkeit erhöhen.

Die Drähte oder der einzelne Draht können durch Kunststoffbänder, z.B.durch ein Geflecht aus Kunststoffbändern, die um die Sammelleitung herum verlaufen, an dieser fixiert sein. Dadurch ist auch ein mechanischer Schutz gegeben.

Die Aufgabe, ein geeignetes Verfahren zur Leckageerkennung und Leckageortung an einer Anlage, insbesondere an einer Rohrleitung, anzugeben, wird gemäß der Erfindung dadurch gelöst, daß aus einer Lösung, die aus einem Leck ausgetreten ist, durch Elektrolyse ein Gas, z.B. Wasserstoff, gewonnen wird, dessen Konzentrationsmaximum in der Sammelleitung, z.B. mit Hilfe des als solchen bekannten Leckerkennungs- und Ortungssystems (LEOS), detektiert und geortet wird. Aus dem Zeitunterschied zwischen dem Einschalten der Pumpe des Leckerkennungs- und Ortungssystems und dem Eintreffen eines Konzentrationsmaximums des Gases am Sensor wird dann der Leckageort bestimmt.

Mit der Einrichtung und mit dem Verfahren nach der Erfindung wird insbesondere der Vorteil erzielt, daß aus einem Leck austretende Lösungen, insbesondere Salzwasser, zuverlässig erkannt und der Leckageort bestimmt werden kann.

### Die Erfindung wird anhand der Zeichnung näher erläutert:

Figur 1 und Figur 2 zeigen zwei Varianten einer Einrichtung zur Leckageerkennung und Leckageortung nach der Erfindung an einer Salzwasserleitung.

Figur 3 zeigt die Anordnung einer Sammelleitung, der ein Metalldraht zugeordnet ist, neben einer Salzwasserleitung.

Figur 4 zeigt die Anordnung einer Sammelleitung, der zwei Metalldrähte zugeordnet sind, unterhalb einer Salzwasserleitung.

Fig. 5 zeigt die Anordnung einer Sammelleitung, der zwei Metalldrähte zugeordnet sind, in saugfähigem Material.

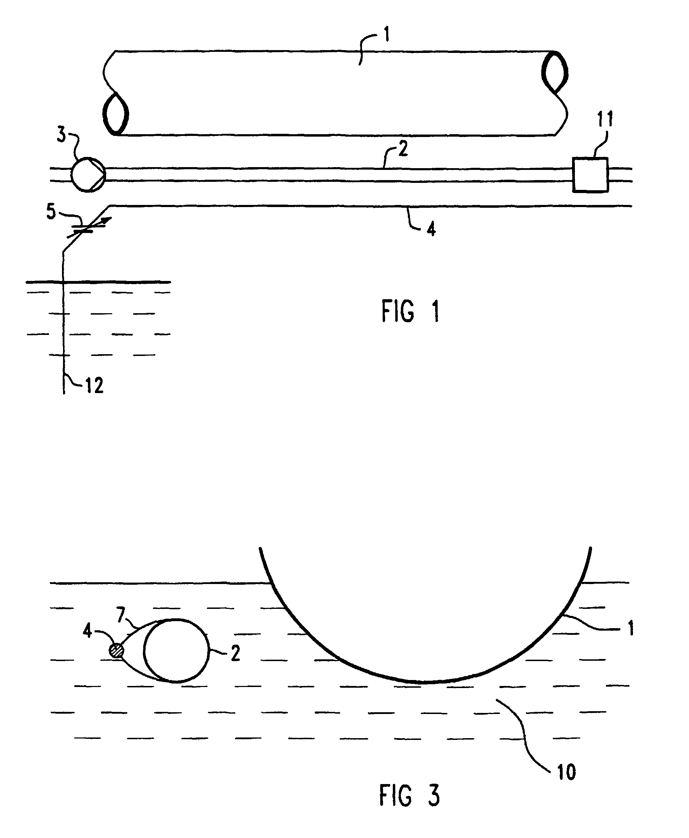

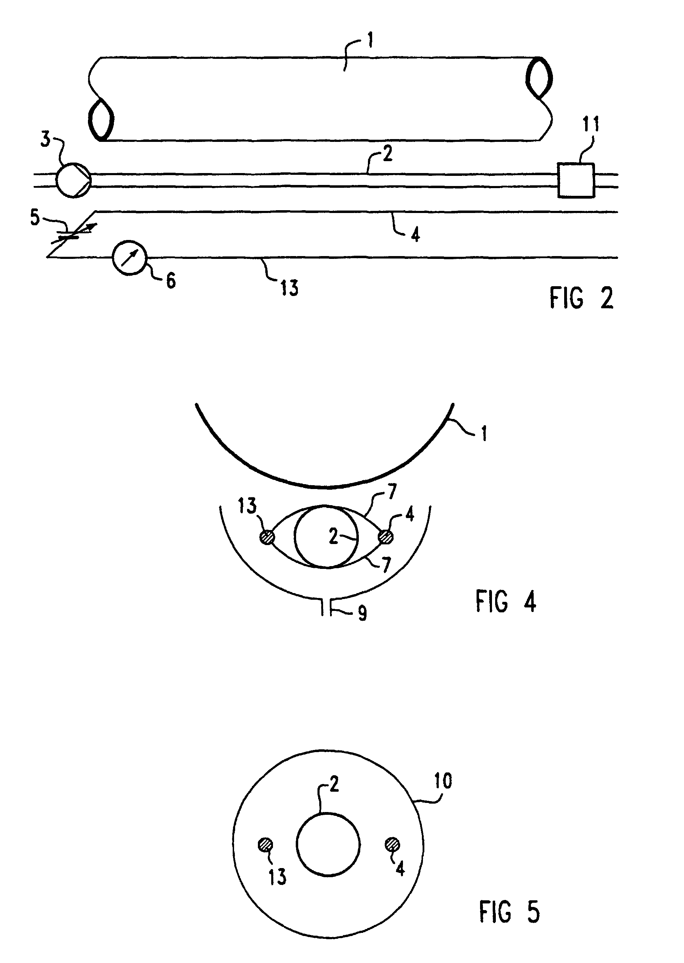

Die Figuren 1 und 2 zeigen eine Salzwasserleitung 1, an der Lecks erkannt und geortet werden sollen. Dieser Salzwasserleitung 1 ist das als solches bekannte Leckerkennungs- und Ortungssystem (LEOS) zugeordnet. LEOS besteht aus einer permeablen Sammelleitung 2, die an der Salzwasserleitung 1 entlang verlegt ist. Die Sammelleitung 2 steht mit einer Pumpe 3 in Verbindung, mit der in zeitlichen Abständen ein Volumen eines Transportmediums, das in der Regel trockene Luft ist:, durch die Sammelleitung 2 hindurchgepumpt wird. Am Ende der Sammelleitung 2 ist ein Sensor 11 angeordnet. Die Sammelleitung 2 ist für zu detektierende Stoffe permeabel. Wenn ein solcher zu detektierender Stoff an einem bestimmten Ort in die Sammelleitung 2 eindringt, bildet sich dort ein Konzentrationsmaximum des Stoffes aus. Beim nächsten Pumpvorgang wird dieses Konzentrationsmaximum zum Sensor 11 transportiert und dort registriert. Aus dem Zeitunterschied zwischen dem Beginn des Pumpvorganges und dem Registrieren des Maximums im Sensor 11 wird bei bekannter Strömungsgeschwindigkeit in der Sammelleitung 2 derjenige Ort bestimmt, an dem der Stoff in die Sammelleitung 2 eingedrungen ist.

Wenn in einer zu überwachenden Leitung ein Stoff transportiert wird, auf den LEOS anspricht, kann ein Leckageort zuverlässig bestimmt werden.

Salzwasser kann jedoch allein mit LEOS nicht erkannt werden. Die Einrichtung der Figur 1 sieht daher vor, daß außerhalb der Sammelleitung 2 an ihr entlang ein Metalldraht 4 angeordnet ist, der mit dem negativen Pol einer Gleichspannungsquelle 5 in Verbindung steht. Der positive Pol dieser Gleichspannungsquelle 5 ist mit einer Metallelektrode 12 verbunden, die an einem beliebigen Ort im Erdboden angeordnet sein kann. Beispielsweise kann die Metallelektrode 12 in einfacher Weise in den Erdboden hineingesteckt sein.

Falls aus einem Leck in der Salzwasserleitung 1 Salzwasser austritt, kommt am Leckageort der Metalldraht 4 mit dem Salzwasser in Berührung. Es kommt dann zu einer Elektrolyse, wobei Wasserstoff gebildet wird.

Die verwendete Sammelleitung 2 ist für Wasserstoff permeabel. Daher dringt der durch die Elektrolyse erzeugte Wassserstoff in die Sammelleitung 2 ein und bildet dort ein Konzentrationsmaximum an der Position des Lecks in der Salzwasserleitung 1. Beim folgenden Pumpvorgang gelangt das Wasserstoffkonzentrationsmaximum zum Sensor 11, der ein Wasserstoffsensor ist.

In der bereits geschilderten Weise wird dann der Leckageort bestimmt.

Durch die Elektrolyse wird nur die mit dem positiven Pol verbundene Metallelekrode 12 korrodiert. Die Metallelektrode 12 kann bei weit fortgeschrittener Korrosion in einfacher Weise ausgetauscht werden. Der mit dem negativen Pol verbundene Metalldraht 4, der sehr lang und nur schwer zugänglich ist, korrodiert nicht. Es ist folglich auch bei einer langen Betriebsdauer kein Austausch des Metalldrahtes 4 erforderlich.

Die Einrichtung der Figur 2 sieht vor, daß außerhalb der Sammelleitung 2 an ihr entlang zwei beabstandete Metalldrähte 4 und 13 angeordnet sind, die mit einer Gleichspannungsquelle 5 in Verbindung stehen.

Falls aus einem Leck in der Salzwasserleitung 1 Salzwasser austritt, werden am Leckageort die beiden Drähte 4 und 13 durch das Salzwasser miteinander verbunden. Es kommt dann dort zu einer Elektrolyse, wobei Wasserstoff gebildet wird. Im übrigen arbeitet die Einrichtung der Figur 2 wie diejenige der. Figur 1.

In einem der beiden Metalldrähte 4 ist beispielsweise ein Amperemeter 6 eingebunden. Da Salzwasser elektrisch leitend ist, kommt es im Bereich des Lecks in der Salzwasserleitung 1 zu einer leitenden Verbindung der Metalldrähte 4 und 13. Der dadurch fließende Strom wird vom Amperemeter 6 registriert. Ein Stromfluß weist folglich darauf hin, daß irgendwo an der Salzwasserleitung 1 ein Leck vorhanden ist.

Die Ortung des Lecks erfolgt dann mit dem geschilderten System (LEOS). Aufgrund der Strommessung ist es möglich, daß auf regelmäßige Pumpvorgänge verzichtet werden kann. Erst, wenn das Vorhandensein eines Lecks durch den Stromfluß erkannt worden ist, wird ein Pumpvorgang eingeleitet, um den Ort des Lecks zu bestimmen. Darüber hinaus kann jedoch die Salzwasserleitung 1 sofort nach dem Stromfluß im Amperemeter 6 abgeschaltet werden, um einen weiteren Austritt von Salzwasser zu vermeiden. Die Leckageortbestimmung dient dann dazu, den Ort, wo eine Reparatur notwendig ist, zu ermitteln.

Falls die Gleichspannungsquelle 5 variabel ist, kann dadurch die durch Elektrolyse entstehende Wasserstoffmenge auf die Empfindlichkeit des Systems (LEOS) eingestellt werden.

Figur 3 zeigt in einem Querschnitt die Sammelleitung 2 in 8Uhr-Position zur Salzwasserleitung 1. Der Sammelleitung 2 ist, wie in Figur 1 gezeigt, ein Metalldraht 4 zugeordnet. Dieser Metalldraht 4 ist mit Kunststoffbändern 7 an der Sammelleitung 2 befestigt. Die Sammelleitung 2 mit dem Metalldraht 4 ist in saugfähigem Material 10, z.B. in Sand, eingebettet, der bis zur Salzwasserleitung 1 reicht und diese auch zumindest unten umgibt. Durch das Sandbett versickert Regenwasser ohne Staunässe im Boden. Nur im Falle einer Leckage in der Salzwasserleitung 1 staut sich die dann austretende große Wassermenge bis zum Sensorschlauch 2 hin auf.

Figur 4 zeigt in einem Querschnitt die Sammelleitung 2 unterhalb der Salzwasserleitung 1. Der Sammelleitung 2 sind zwei Metalldrähte 4 und 13, wie in Figur 2 gezeigt, zugeordnet. Sie sind dazu mit Kunststoffbändern 7 an der Sammelleitung 2 befestigt. Unterhalb der Sammelleitung 2 und der Metalldrähte 4 und 13 ist eine Auffangrinne 8 angeordnet, die eine Auslaßöffnung 9 aufweist. Sollte Regenwasser in die Auffangrinne 8 gelangen, wird dieses sofort durch die Auslaßöffnung 9 abfließen. Bei einem Leck in der Salzwasserleitung 1 gelangt jedoch soviel Salzwasser in die Auffangrinne 8, daß der Wasserspiegel in der Auffangrinne 8 relativ schnell die Metalldrähte 4 und 13 erreicht, so daß Wasserstoff erzeugt wird. Auf diese Weise werden Fehlmessungen durch Regenwasser vermieden.

Figur 5 zeigt eine Anordnung aus einer Sammelleitung 2 und Metalldrähten 4 und 13, die mit einem saugfähigen Material 10 umgeben sind. Dieses saugfähige Material 10 nimmt das aus einem Leck austretende Salzwasser auf und bewirkt, wie auch die Auffangrinne 8, daß das Salzwasser möglichst lange mit den Metalldrähten 4 und 13 zur Erzeugung von Wasserstoff in Kontakt ist.

Die Variante der Figur 3 kann wie in den Figuren 2, 4 und 5 gezeigt, eine Sammelleitung 2 aufweisen, der zwei Metalldrähte 4 und 13 zugeordnet sind. Ebenso können die Varianten der Figuren 4 und 5, wie in den Figuren 1 und 3 gezeigt, eine Sammelleitung 2 aufweisen, der nur ein Metalldraht 4 zugeordnet ist.

Es kann auch die Spannung an der Spannungsquelle 5 so eingestellt werden, daß bei Regenwasser die Wasserstoffproduktion nicht für ein meßbares Konzentrationsmaximum in der Sammelleitung 2 ausreicht. Nur wenn Salzwasser aus der Salzwasserleitung 1, das deutlich mehr Salze enthält, den Metalldraht 4 erreicht, wird dann eine meßbare Wasserstoffmenge erzeugt.

Mit der Einrichtung nach der Erfindung kann ein Leck in der Salzwasserleitung 1 zuverlässig erkannt und geortet werden.

## Patentansprüche

1. Einrichtung zur Leckageerkennung und Leckageortung an einer Anlage, insbesondere an einer Rohrleitung (1), mit einer Sammelleitung (2), die für einen Stoff permeabel ist, und die mit einer Pumpe (3) und mit einen Sensor (11) für den Stoff verbunden ist, wobei
außerhalb der Sammelleitung (2) an ihr entlang ein Metalldraht (4) angeordnet ist, **dadurch gekenzeichnet, daß** der Metalldraht (4) mit dem negativen Pol einer Gleichspannungsquelle (5) in Verbindung steht.

2. Einrichtung nach Anspruch 1,
**dadurch gekennzeichnet, daß** unterhalb der Sammelleitung (2) und des Metalldrahtes (4) eine Auffangrinne (8) angeordnet ist.

3. Einrichtung nach einem der Ansprüche 1 oder 2,
**dadurch gekennzeichnet, daß** die Sammelleitung (2) und der Metalldraht (4) von einem saugfähigen Material (10) umgeben sind.

4. Einrichtung nach Anspruch3,
**dadurch gekennzeichnet, daß** die Sammelleitung (2) zusammen mit dem Metalldraht (4) in 8Uhr- bis 9Uhr-Position oder in 3Uhr- bis 4Uhr-Position an der Rohrleitung (1) entlang angeordnet ist.

5. Einrichtung nach einem der Ansprüche 1 bis 3,
**dadurch gekennzeichnet, daß** die Sammelleitung (2) mit den Metalldraht (4) unterhalb einer Rohrleitung (1) angeordnet ist.

6. Einrichtung nach einem der Ansprüche 1 bis 5,
**dadurch gekennzeichnet, daß** die Gleichspannungsquelle (5) variabel ist.

7. Einrichtung nach einem der Ansprüche 1 bis 6,
**dadurch gekennzeichnet, daß** mit dem positiven Pol der Gleichspannungsquelle (5) eine Metallelektrode (12) verbunden ist, die im Erdboden anzuordnen ist.

8. Einrichtung nach einem der Ansprüche 1 bis 6,
**dadurch gekennzeichnet, daß** mit dem positiven Pol der Gleichspannungsquelle (5) ein weiterer Metalldraht (13) verbunden ist, der vom mit dem negativen Pol verbundenen Metalldraht (4) beabstandet außerhalb der Sammelleitung (2) an ihr entlang angeordnet ist.

9. Einrichtung nach Anspruch 8,
**dadurch gekennzeichnet, daß** die beiden Metalldrähte (4 und 13) aus unterschiedlichen Metallen bestehen.

10. Einrichtung nach Anspruch 9,
**dadurch gekennzeichnet, daß** der eine Metalldraht (4) aus Kupfer und der andere Metalldraht (13) aus verzinktem Kupfer besteht.

11. Einrichtung nach einem der Ansprüche 8 bis 10,
**dadurch gekennzeichnet, daß** in mindestens einem der Metalldrähte (4, 13) ein Amperemeter (6) eingebunden ist.

12. Einrichtung nach einem der Ansprüche 8 bis 10,
**dadurch gekennzeichnet, daß** an die Metalldrähte (4, 13) nacheinander an beiden Enden eine Gleichspannungsquelle (5) anschließbar ist, der ein Amperemeter (6) zugeordnet ist.

13. Verfahren zur Leckageerkennung und Leckageortung an einer Anlage, insbesondere an einer Rohrleitung (1), wobei ein Konzentrationsmaximum eines Stoffes, der in eine permeable Sammelleitung (2) eingedrungen ist, detektiert und geortet wird,
**dadurch gekennzeichnet, daß** aus einer Lösung, die aus einem Leck ausgetreten ist, durch Elektrolyse ein Gas gewonnen wird, dessen Konzentrationsmaximum in der Sammelleitung (2) detektiert und geortet wird.

## Claims

1. Means for leakage detection and leakage location in a system, in particular in a pipeline (1), having a collecting line (2) which is permeable to a substance and which is connected to a pump (3) and to a sensor (11) for the substance, a metal wire (4) being arranged outside and along the collecting line (2), **characterized in that** the metal wire (4) is connected to the negative pole of a direct current source (5).

2. Means according to Claim 1, **characterized in that** a collecting channel (8) is arranged underneath the collecting line (2) and the metal wire (4).

3. Means according to either of Claims 1 and 2, **characterized in that** the collecting line (2) and the metal wire (4) are surrounded by an absorbent material (10).

4. Means according to Claim 3, **characterized in that** the collecting line (2), together with the metal wire (4) is arranged along the pipeline (1) in the 8 o'clock to 9 o'clock position or in the 3 o'clock to 4 o'clock position.

5. Means according to one of Claims 1 to 3, **characterized in that** the collecting line (2) with the metal wire (4) is arranged underneath a pipeline (1).

6. The means according to one of Claims 1 to 5, **characterized in that** the direct current source (5) is variable.

7. Means according to one of Claims 1 to 6, **characterized in that** a metal electrode (12), which is to be arranged in the ground, is connected to the positive pole of the direct current source (5).

8. Means according to one of Claims 1 to 6, **characterized in that** the positive pole of the direct current source (5) has connected to it a further metal wire (13), which is arranged outside and along the collecting line (2), at a distance from the metal wire (4) that is connected to the negative pole.

9. Means according to Claim 8, **characterized in that** the two metal wires (4 and 13) consist of different metals.

10. Means according to Claim 9, **characterized in that** one metal wire (4) consists of copper and the other metal wire (13) consists of zinc-plated copper.

11. Means according to one of Claims 8 to 10, **characterized in that** an ammeter (6) is incorporated into at least one of the metal wires (4, 13).

12. Means according to one of Claims 8 to 10, **characterized in that** a direct current source (5), which is assigned an ammeter (6), can be connected to each end of the metal wires (4, 13) in turn.

13. Method for leakage detection and leakage location in a system, in particular in a pipeline (1), a concentration maximum of a substance which has penetrated into a permeable collecting line (2) being detected and located, **characterized in that** a gas is obtained by electrolysis from a solution that has emerged from a leak, and the concentration maximum of said gas in the collecting line (2) is detected and located.

## Revendications

1. Dispositif de détection de fuites et de localisation de fuites sur une installation, notamment sur une conduite (1), comportant une canalisation (2) collectrice qui est perméable à une substance et qui communique avec une pompe (3) et avec un détecteur (11) pour la substance, un fil (4) métallique étant monté à l'extérieur de la canalisation (2) collectrice, le long de celle-ci, **caractérisé en ce que** le fil (4) métallique est en liaison avec le pôle négatif d'une source (5) de tension continue.

2. Dispositif suivant la revendication 1, **caractérisé en ce qu'**une rigole (8) collectrice est ménagée au-dessous de la canalisation (2) collectrice et du fil (4) métallique.

3. Dispositif suivant l'une des revendications 1 ou 2, **caractérisé en ce que** la canalisation (2) collectrice et le fil (4) métallique sont entourés d'un matériau (10) absorbant

4. Dispositif suivant la revendication 3, **caractérisé en ce que** la canalisation (2) collectrice est montée conjointement avec le fil (4) métallique en position 8 heure à 9 heure ou en position 3 heure à 4 heure le long de la conduite (1).

5. Dispositif suivant l'une des revendications 1 à 3, **caractérisé en ce que** la canalisation (2) collectrice est montée avec le fil (4) métallique au-dessous d'une conduite (1).

6. Dispositif suivant l'une des revendications 1 à 5, **caractérisé en ce que** la source (5) de tension continue est variable.

7. Dispositif suivant l'une des revendications 1 à 6, **caractérisé en ce qu'**une électrode (12) métallique qui est à monter dans le sol est reliée au pôle positif de la source (5) de tension continue.

8. Dispositif suivant l'une des revendications 1 à 6, **caractérisé en ce qu'**il est relié au pôle positif de la source (5) de tension continue un fil (13) métallique supplémentaire qui est monté à distance du fil (4) métallique relié au pôle négatif à l'extérieur de la canalisation (2) collectrice, le long de celle-ci.

9. Dispositif suivant la revendication 8, **caractérisé en ce que** les deux fils (4 et 13) métalliques sont en des métaux différents.

10. Dispositif suivant la revendication 9, **caractérisé en ce que** l'un (4) des fils métalliques est en cuivre et l'autre fil (13) métallique est en cuivre galvanisé.

11. Dispositif suivant l'une des revendications 8 à 10, **caractérisé en ce qu'**un ampèremètre (6) est intégré à au moins l'un des fils (4, 13) métalliques.

12. Dispositif suivant l'une des revendications 8 à 10, **caractérisé en ce qu'**il peut être raccordé aux fils (4, 13) métalliques successivement aux deux extrémités une source (5) de tension continue à laquelle est associé un ampèremètre (6).

13. Procédé de détection de fuites et de localisation de fuites sur une installation, notamment sur une conduite (1), un maximum de concentration d'une substance qui a pénétré dans une canalisation (2) collectrice perméable étant détecté et localisé, **caractérisé en ce que** l'on obtient à partir d'une solution qui est sortie d'une fuite, par électrolyse, un gaz dont le maximum de concentration dans la canalisation (2) collectrice est détecté et localisé.
